**Europäisches Patentamt**

**European Patent Office**

**Office européen des brevets**

(19)

(11) Veröffentlichungsnummer: **0 076 380**
**B1**

(12) **EUROPÄISCHE PATENTSCHRIFT**

(45) Veröffentlichungstag der Patentschrift:
**20.11.86**

(51) Int. Cl.⁴: **H 04 N 1/40**

(21) Anmeldenummer: **82107885.4**

(22) Anmeldetag: **27.08.82**

(54) **Verfahren und Schaltungsanordnung zur Kontraststeigerung.**

(30) Priorität: **03.10.81 DE 3139483**

(43) Veröffentlichungstag der Anmeldung:
**13.04.83 Patentblatt 83/15**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**DE - C - 1 039 842**
**DE - C - 2 226 990**

(73) Patentinhaber: **DR.-ING. RUDOLF HELL GmbH, Grenzstrasse 1-5, D-2300 Kiel 14 (DE)**

(72) Erfinder: **Gast, Uwe, Rammsmoor 2, D-2300 Rammsee (DE)**

ACTORUM AG

## Beschreibung

### Technisches Gebiet

Die Erfindung bezieht sich auf die elektronische Druckformherstellung mittels Graviergeräten und Scannern, insbesondere auf ein Verfahren und eine Schaltungsanordnung zur Kontraststeigerung bei der Wiederaufzeichnung von Vorlagen.

### Zugrundeliegender Stand der Technik

Bei der elektronischen Druckformherstellung mittels Graviergeräten und Scannern wird eine zu reproduzierende Vorlage mit einem optoelektronischen Abtastorgan punkt- und zeilenweise abgetastet und das dabei gewonnene Bildsignal nach den Erfordernissen des Reproduktionsprozesses korrigiert. Das korrigierte Bildsignal steuert ein Aufzeichnungsorgan, welches die Wiederaufzeichnung der Vorlage auf einem Aufzeichnungsmedium vornimmt.

Bei Druckform-Graviergeräten erfolgt die Rasterpunkt-Erzeugung durch den Gravierstichel eines elektromagnetischen Gravierorgans oder durch den Energiestrahl eines Energiestrahl-Erzeugers als Aufzeichnungsorgan. Bei Scannern ist das Aufzeichnungsorgan eine Lichtquelle zur Filmbelichtung.

Die zu reproduzierende Vorlage ist in den meisten Fällen eine Kombination aus Halbtonbildern (Halbton-Bereich) und aus Schriftzeichen oder Strichelementen von grafischen Darstellungen (Strich-Bereich).

Bereits bei der fotografischen Herstellung einer Filmvorlage wird der Kontrast, insbesondere in feinen Details, gegenüber dem Original durch Unschärfe in den Filmschichten sowie durch Vergrössern oder Umkopieren gemindert. Hinzu kommt, dass das Auflösungsvermögen des optoelektronischen Abtastorgans durch Streulicht und durch die Unschärfe des Abtast-Objektivs begrenzt ist, wodurch in der Reproduktion eine weitere Kontrastminderung eintritt, die das menschliche Auge als Unschärfe empfindet.

Es besteht daher die Notwendigkeit, den verminderten Kontrast bzw. die verminderte Bildschärfe bei der Druckformherstellung wiederzugewinnen oder aus redaktionellen Gründen gegenüber dem Original sogar noch zu steigern.

Aus der US-C-2 691 696 und der DE-C-1 039 842 ist es bereits bekannt, zur Kontrast- bzw. Schärfesteigerung ausser dem aktuellen Bildpunkt mit einer Bildpunkt-Blende auch sein Umfeld mit einer entsprechend grösseren Umfeld-Blende abzutasten, das Differenzsignal aus Umfeldsignal und Bildsignal zu bilden und als Korrektursignal dem Bildsignal in wählbarer Stärke zu überlagern. Diese Massnahme, die der Unscharfmaskierung in der fotografischen Reproduktionstechnik entspricht, führt zur Verbesserung des Detailkontrastes bzw. der Bildschärfe an Tonwertsprüngen oder Konturen, da in unmittelbarer Umgebung eines Tonwertsprunges eine dunkle Bildpartie dunkler und eine helle Bildpartie heller als in einiger Entfernung vom Tonwertsprung aufgezeichnet wird.

Bei den bekannten Lösungen ist die Amplitude des Korrektursignals von der Grösse des jeweiligen Tonwertsprunges abhängig, so dass normalerweise die Amplitude des Korrektursignals an Strichelementen und Schriftkonturen (grosse Tonwertsprünge) stark, an Konturen in Halbtonbildern (kleine Tonwertsprünge) dagegen nur gering korrigiert wird.

In der Praxis kommt es aber darauf an, insbesondere den Detailkontrast in Halbton-Bereichen anzuheben, da Strichelemente und Schriftkonturen ohnehin schärfer wiedergegeben werden. Um in Halbton-Bereichen überhaupt den gewünschten Effekt erzielen zu können, muss bei der aus der US-C-2 691 696 bekannten Lösung dem Bildsignal das verfügbare Korrektursignal in voller Stärke überlagert werden. In diesem Falle entstehen aber insbesondere an Spitzlichtern, an harten Konturen und um schwarze Schriftzeichen störende weisse Säume oder Ränder, die besonders auffällig sind, wenn zum Beispiel schwarze Schrift in einem Grauton steht. Nachteil dieser bekannten Lösung ist also, dass sie sich jeweils nur auf Halbton-Bereiche oder Strich-Bereiche optimieren lässt.

Zur Reduzierung solcher störenden Säume ist es aus der DE-C-1 039 842 bekannt, in den Signalwegen des Bildsignals und des Umfeldsignals je eine Verzerrerstufe für korrigierende Tonwert-Änderungen und in den Signalweg des Korrektursignals zwei Regelverstärker und einen Amplitudenbegrenzer einzufügen. Mit Hilfe der Regelverstärker, von denen der eine vom Bildsignal und der andere vom Umfeldsignal wird, lassen sich unsymmetrische, d.h. nach Weiss und Schwarz hin unterschiedliche Kontrast- bzw. Schärfekorrekturen erzielen, und durch die Amplitudenbegrenzung des Korrektursignals wird eine Überbetonung grosser Tonwertsprünge vermieden. Dennoch gibt es in der Praxis immer wieder Schwierigkeiten, solche Ränder und Säume zu vermeiden oder zumindest so stark zur reduzieren, dass sie nicht mehr stören.

Der im Anspruch 1 angegebenen Erfindung liegt daher die Aufgabe zugrunde, ein Verfahren und eine Schaltungsanordnung anzugeben, mit denen bei der Wiederaufzeichnung von Vorlagen sowohl in Halbtonbildern als auch an Strichelementen und Schriftkonturen eine gute Kontrastanhebung bzw. Schärfesteigerung erzielt wird.

Die Erfindung wird im folgenden anhand der Fig. 1 bis 4 näher erläutert. Es zeigen:

Fig. 1 eine prinzipielle Schaltungsanordnung eines elektronischen Bildreproduktionsgerätes,

Fig. 2 eine Darstellung der verschiedenen Abtastbereiche,

Fig. 3 Signalverläufe bei einer unsymmetrischen Kontrastanhebung, und

Fig. 4 Signalverläufe bei einer symmetrischen Kontrastanhebung.

### Bester Weg zur Ausführung der Erfindung

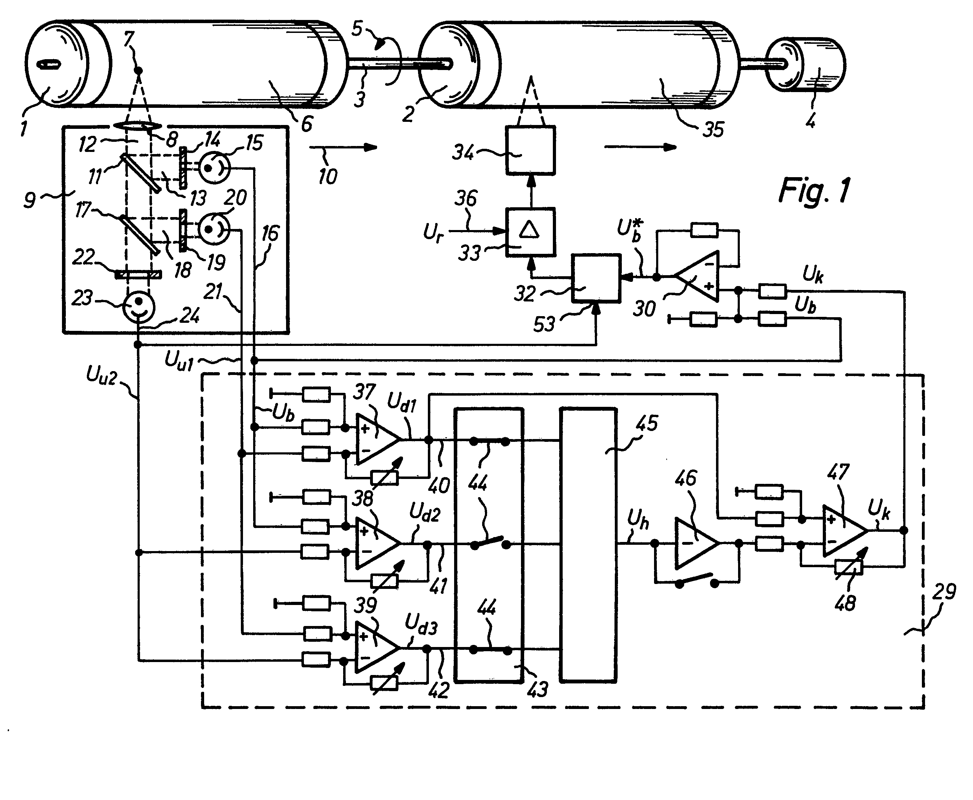

Figur 1 zeigt eine prinzipielle Schaltungsanordnung eines elektronischen Bildreproduktionsgerätes mit einer Signalformerstufe zur Kontrastanhebung.

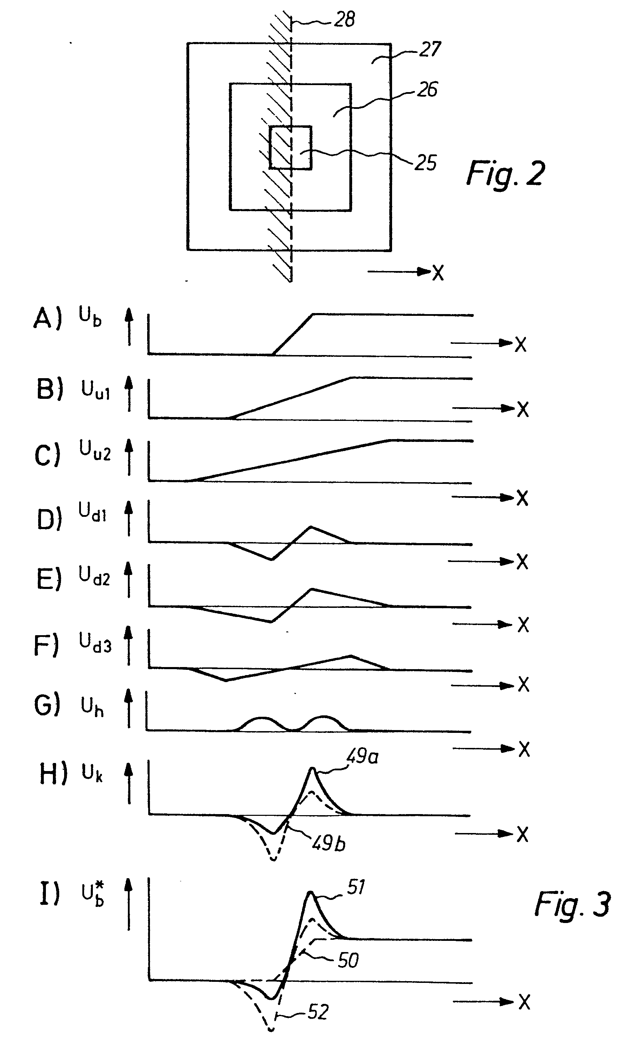

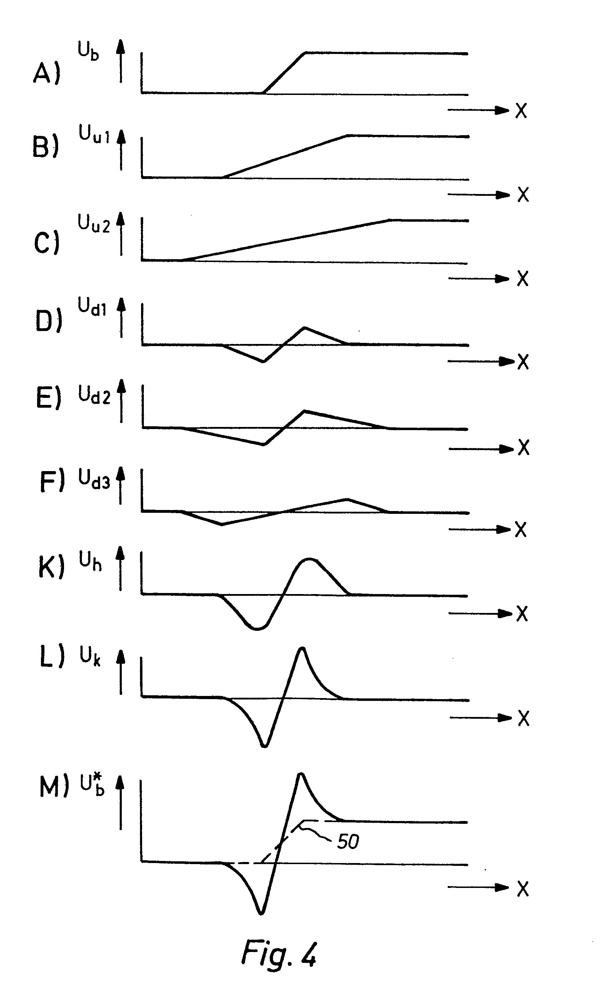

Die Fig. 2 und die in den Fig. 3 und 4 dargestellten Signalverläufe verdeutlichen die Wirkungsweise der Schaltungsanordnung.

Eine Abtasttrommel 1 und eine Aufzeichnungstrommel 2 sind durch eine Welle 3 mechanisch miteinander verbunden und werden gemeinsam von einem Motor 4 in Richtung eines Pfeiles 5 angetrieben. Auf der Abtasttrommel 1 ist eine Vorlage 6 aufgespannt, die Halbtonbilder, Strichelemente und Schriftkonturen aufweisen möge. Die Vorlage 6 wird von einem Lichtpunkt 7 einer nicht dargestellten Lichtquelle punktweise beleuchtet. Bei einer Aufsichts-Vorlage gelangt das reflektierte und bei einer Durchsichts-Vorlage das durchgelassene und mit der Helligkeitsinformation der Vorlage 6 modulierte Abtastlicht über ein Abtast-Objektiv 8 in eine Abtasteinrichtung 9, in welcher ein Bildsignal $U_b$, ein erstes Umfeldsignal $U_{u1}$ und ein zweites Umfeldsignal $U_{u2}$ erzeugt werden. Die Abtasteinrichtung 9 bewegt sich axial in Richtung eines Pfeiles 10 an der Abtasttrommel 1 vorbei.

Bei dem dargestellten Ausführungsbeispiel der Abtasteinrichtung 9 für Schwarz/Weiss-Vorlagen befindet sich im Strahlengang des Abtast-Objektivs 8 ein halbdurchlässiger Spiegel 11, welcher aus dem Abtastlichtbündel 12 ein erstes Teilbündel 13 abspiegelt. Das erste Teilbündel 13 fällt auf eine Bildpunkt-Blende 14. Der durch die Öffnung der Bildpunkt-Blende 14 gelangende Anteil des ersten Teilbündels 13 wird in einem optoelektronischen Wandler 15 in das Bildsignal $U_b$ auf einer Leitung 16 umgewandelt. Das Bildsignal $U_b$ ist ein Mass für die Helligkeit eines elementaren, als Bildpunkt bezeichneten Abtastbereiches auf der Vorlage 6, dessen Grösse durch die Öffnung der Bildpunkt-Blende 14 bestimmt wird.

Ein zweiter teildurchlässiger Spiegel 17 im Strahlengang des Abtast-Objektivs 8 spiegelt aus dem Abtastlichtbündel 12 ein zweites Teilbündel 18 aus. Das zweite Teilbündel 18 fällt auf eine erste Umfeld-Blende 19, deren Öffnung grösser als die der Bildpunkt-Blende 14 ist. Der durch die Öffnung der ersten Umfeld-Blende 19 gelangende Anteil des zweiten Teilbündels 18 wird in einem weiteren optoelektronischen Wandler 20 in das erste Umfeldsignal $U_{u1}$ auf einer Leitung 21 umgesetzt. Das erste Umfeldsignal $U_{u1}$ ist ein Mass für die mittlere Helligkeit eines durch die Öffnung der ersten Umfeld-Blende 19 festgelegten und gegenüber dem elementaren Abtastbereich vergrösserten ersten Abtastbereiches (erstes Umfeld) oder anders ausgedrückt die mittlere Helligkeit eines den aktuellen Bildpunkt umgebenen Bildpunkt-Bereiches.

Das durch den halbdurchlässigen Spiegel 17 gelangte Abtastlichtbündel 12 fällt durch die Öffnung einer zweiten Umfeld-Blende 22 auf einen weiteren optoelektronischen Wandler 23 und wird dort in das zweite Umfeldsignal $U_{u2}$ auf einer Leitung 24 umgesetzt. Die Öffnung der zweiten Umfeld-Blende 22 ist noch grösser als die der ersten Umfeld-Blende 19, so dass ein noch grösserer zweiter Abtastbereich oder Bildpunkt-Bereich (zweites Umfeld) um den aktuellen Bildpunkt erfasst wird.

Zur Verdeutlichung sind in Fig. 2 der elementare Abtastbereich 25 (Bildpunkt) sowie der dazu konzentrische erste Abtastbereich 26 (erstes Umfeld) und der zweite Abtastbereich 27 (zweites Umfeld) auf der Vorlage 6 dargestellt, deren Form quadratisch angenommen ist. Die Abtastbereiche können aber auch z.B. Kreisform oder jede andere beliebige Form haben. Angedeutet ist ausserdem eine Konturlinie 28 auf der Vorlage 6 (Hell/Dunkel-Sprung), die sich aufgrund der Relativbewegung zwischen Vorlage 6 und Abtasteinrichtung 9 in X-Richtung bewegen möge.

In den Fig. 3 und 4 zeigen jeweils die Diagramme (A), (B) und (C) die Signalverläufe des Bildsignals $U_b$, des ersten Umfeldsignals $U_{u1}$ und des zweiten Umfeldsignals $U_{u2}$ in Abhängigkeit des Weges x, auf dem sich gemäss Fig. 2 die Konturlinie 28 über die Abtastbereiche hinwegbewegt.

Die Erfindung ist nicht auf das dargestellte Ausführungsbeispiel der Abtasteinrichtung 9 zur gleichzeitigen Auswertung des Umfeldes beschränkt.

Im optischen Aufbau können anstelle der teildurchlässigen Spiegel auch kreisringförmige Spiegel verwendet werden, bei denen die Öffnung in der Spiegelmitte den elementaren Abtastbereich oder Bildpunkt und die Kreisringfläche ein Umfeld festlegen.

Zur gleichzeitigen Erfassung der Bildpunkt-Umgebung kann die Abtasteinrichtung 9 auch mit Fotodioden-Zeilen oder einer Fotodioden-Matrix ausgerüstet sein. Eine andere Ausführungsform der Abtasteinrichtung 9 besteht aus einem herkömmlichen Abtastorgan, das lediglich ein Bildsignal erzeugt. In Zeilen-Speichern, die dem Abtastorgan nachgeschaltet sind, werden dann die Bildsignalwerte mehrerer der aktuell abgetasteten Zeile benachbarter Zeilen oder Zeilenabschnitte zwischengespeichert. Schliesslich kann dem Abtastorgan auch ein sogenannter Ganzbild-Speicher nachgeschaltet sein, in dem sämtliche Bildsignalwerte einer Vorlage abgelegt sind. In beiden Fällen werden die Umfeldsignale aus den abgespeicherten Bildsignalwerten der einzelnen Abtastbereiche berechnet.

Selbstverständlich kann anstelle einer Abtasteinrichtung für Schwarz/Weiss-Abtastung auch eine solche für Farbabtastung verwendet werden.

Zurück zu Fig. 1.

Die Abtasteinrichtung 9 ist über die Leitungen 16, 21 und 24 mit einer Signalformerstufe 29 verbunden, in der aus dem Bildsignal $U_b$, dem ersten Umfeldsignal $U_{u1}$ und dem zweiten Umfeldsignal $U_{u2}$ ein Korrektursignal $U_k$ abgeleitet wird. Das Korrektursignal $U_k$ wird dem Bildsignal $U_b$ in einem nachgeschalteten Addierer 30 zur Kontrastanhebung von Tonwertsprüngen in der Vorlage bzw. zur Aufsteilung von Bildsignalsprüngen überlagert. Das aufgesteilte Bildsignal $U^*_b$ wird in einer Gradations-Stufe 32 nach den Erfordernissen des Reproduktionsprozesses modifiziert, in einem Endverstärker 33 verstärkt und steuert schliesslich ein Aufzeichnungsorgan 34, welches die punkt- und zeilenweise Wiederaufzeichnung der Vorlage 6 auf einem Aufzeichnungsmedium 35 auf der Aufzeichnungstrommel 2 vornimmt.

Zur Erzeugung eines Druckrasters kann dem Bildsignal $U^*_b$ im Endverstärker 33 ein Rastersignal $U_r$ auf einer Leitung 36 überlagert werden.

Das Aufzeichnungsorgan 34 bewegt sich ebenfalls axial in Richtung des Pfeiles 10 an der Aufzeichnungstrommel 2 entlang. Vorschubeinrichtungen für die Abtasteinrichtung 9 und das Aufzeichnungsorgan 34 sind nicht dargestellt.

Handelt es sich bei dem beschriebenen Bildreproduktionsgerät um ein Druckform-Graviergerät, ist das Aufzeichnungsorgan 34 z.B. ein elektromagnetisches Gravierorgan mit einem Gravierstichel als Schneidwerkzeug für die Rasterpunkte oder ein Energiestrahl-Erzeuger, dessen Energiestrahl die Rasterpunkte durch Materialverdampfung bildet. Handelt es sich dagegen um einen Scanner, ist das Aufzeichnungsorgan 34 eine durch das Bildsignal helligkeitsmodulierte Lichtquelle, welche eine gerasterte oder ungerasterte Wiederaufzeichnung auf einem Filmmaterial erzeugt.

Im folgenden wird der Aufbau und die Wirkungsweise der Signalformerstufe 29 zur Bildung der Korrektursignale $U_k$ näher erläutert.

Die Signalformerstufe 29 weist drei in der Verstärkung einstellbare Differenzverstärker 37, 38 und 39 auf, in denen aus dem Bildsignal $U_b$, dem ersten Umfeldsignal $U_{u1}$ und dem zweiten Umfeldsignal $U_{u2}$ folgende drei Differenzsignale $U_{d1}$, $U_{d2}$ und $U_{d3}$ auf Leitungen 40, 41 und 42 gebildet werden.

$$U_{d1} = g_1 (U_b - U_{u1})$$
$$U_{d2} = g_2 (U_b - U_{u2})$$
$$U_{d3} = g_3 (U_{u1} - U_{u2}) \qquad (1)$$

In den Figuren 3 und 4 zeigen jeweils die Diagramme (D), (E) und (F) die entsprechenden Differenzsignale $U_{d1}$, $U_{d2}$ und $U_{d3}$. Die Bewertungsfaktoren $g_1$, $g_2$ und $g_3$ entsprechen den Verstärkungsfaktoren der Differenzverstärker 37, 38 und 39.

Die Differenzsignale $U_{d1}$, $U_{d2}$ und $U_{d3}$ werden über eine Auswahl-Stufe 43 einer Verknüpfungs-Stufe 45 zugeführt. In der Auswahl-Stufe 43 werden mittels Schalter 44 diejenigen Differenzsignale $U_{d1}$, $U_{d2}$ und $U_{d3}$ zur Verknüpfungs-Stufe 45 durchgeschaltet, die an der Bildung des Korrektursignals $U_k$ beteiligt werden sollen. Durch die Auswahl der betreffenden Differenzsignale $U_{d1}$, $U_{d2}$ und $U_{d3}$ kann, wie noch gezeigt wird, eine symmetrische oder unsymmetrische Kontrastanhebung an Konturen bzw. eine Aufsteilung an Bildsignalsprüngen erreicht werden, wobei im Falle einer symmetrischen Aufsteilung die positive und die negative Amplitude des Korrektursignals $U_k$ betragsmässig gleich und im Falle einer unsymmetrischen Aufsteilung ungleich sind.

In der Verknüpfungs-Stufe 45 wird aus den ausgewählten Differenzsignalen $U_{d1}$, $U_{d2}$ und $U_{d3}$ zunächst ein Hilfssignal $U_h$ gewonnen. Der Verknüpfungs-Stufe 45 ist ein abschaltbarer Inverter 46 nachgeschaltet, welcher das Hilfssignal $U_h$ gegebenenfalls im Vorzeichen invertiert, bevor das Korrektursignal $U_k$ aus dem ersten Differenzsignal $U_{d1}$ und dem Hilfssignal $U_h$ in einem Addierer 47 gemäss Gleichung (2) gebildet wird.

$$U_k = U_{d1} \pm U_h \qquad (2)$$

Die Stärke des Korrektursignals $U_k$ kann durch Verstärkungsänderung des Addierers 47 mittels eines Potentiometers 48 von Hand eingestellt werden.

Im Ausführungsbeispiel ist die Verknüpfungs-Stufe 45 ein Multiplizierer, so dass das Hilfssignal $U_h$ durch Produktbildung aus den ausgewählten Differenzsignalen entsteht. Es liegt im Rahmen der Erfindung, die Differenzsignale in jeder anderen geeigneten Art, z.B. durch Addition oder Subtraktion, miteinander zu verknüpfen, um das Hilfssignal $U_h$ zu erhalten.

Unsymmetrische Kontrastanhebung

Für eine unsymmetrische Aufsteilung des Bildsignals $U_b$ wird das Hilfssignal $U_h$ z.B. gemäss Gleichung (3) oder Gleichung (4) gebildet.

$$U_h = U_{d1} \cdot U_{d3} \quad (3) \qquad U_h = U_{d1} \cdot U_{d2} \quad (4)$$

Der Signalverlauf gemäss Gleichung (3) ist im Diagramm (G) der Fig. 3 dargestellt.

Aus den Gleichungen (2) und (3) ergibt sich dann das Korrektursignal $U_k$ zu:

$$U_k = U_{d1} \pm U_{d1} \cdot U_{d3}$$
$$U_k = g_1 (U_b - U_{u1})[1 \pm (U_{u1} - U_{u2})] \qquad (5)$$

Der Verlauf des Korrektursignals $U_k$ nach Gleichung (5) ist im Diagramm (H) der Fig. 3 dargestellt. Der Verlauf 49a ergibt sich durch Addition und der gestrichelt dargestellte Verlauf 49b durch Subtraktion von Differenzsignal $U_{d1}$ und Hilfssignal $U_h$, wobei im Falle der Addition der Inverter 46 kurzgeschlossen ist.

Das Diagramm (I) der Fig. 3 zeigt das Ergebnis der unsymmetrischen Aufsteilung des Bildsignals $U^*_b$ an einem Bildsignalsprung 50, der z.B. durch eine Kontur von «Schwarz» nach «Weiss» in der Vorlage entstanden sein möge. Man sieht, dass durch das Amplitudenverhältnis des Korrektursignals $U_k$ bzw. durch die Summenbildung oder Differenzbildung von Differenzsignal $U_{d1}$ und Hilfssignal $U_h$ bestimmt werden kann, ob die Aufsteilung des Bildsignals $U^*_b$ nach «Weiss» (Verlauf 51) oder aber nach «Schwarz» (Verlauf 52) überbetont sein soll.

Die Invertierung des Hilfssignals $U_h$ im Inverter 46 liesse sich auch davon abhängig machen, ob der Bildsignalsprung von «Schwarz» nach «Weiss» oder umgekehrt erfolgt.

Symmetrische Kontrastanhebung

Für eine symmetrische Aufsteilung des Bildsignal $U_b$ werden in der Verknüpfungs-Stufe 45 alle drei Differenzsignale $U_{d1}$, $U_{d2}$ und $U_3$ miteinander multipliziert.

$$U'_h = U_{d1} \cdot U_{d2} \cdot U_{d3} \qquad (6).$$

Der Verlauf des Hilfssignals $U'_h$ ist im Diagramm (K) der Fig. 4 wiedergegeben. Das Korrektursignal $U'_k$, das im Diagramm (L) der Fig. 4 dargestellt ist, ergibt sich dann nach den Gleichungen (2) und (6) zu:

$$U'_k = U_{d1} \pm U_{d1} \cdot U_{d2} \cdot U_{d3}$$
$$U'_k = g_1 (U_b - U_{u1})[1 \pm g_2(U_b - U_{u2}) \cdot g_3(U_{u1} - U_{u2})]$$
$$(7)$$

Das Diagramm (M) der Fig. 4 zeigt das Ergebnis der symmetrischen Aufsteilung des Bildsignals $U^*_b$ wiederum an dem Bildsignalsprung 50.

Anhand der Signalverläufe im Diagramm (I) der Fig. 3 und im Diagramm (M) der Fig. 4 ist zu erkennen, dass durch Einbeziehung eines zweiten Umfeldsignals an der Bildung des Korrektursignals der Abfall bzw. Anstieg vom Maximalwert und Minimalwert des aufgesteilten Bildsignals $U^*_b$ wesentlich steiler als bei herkömmlichen Korrekturmassnahmen ist. Dadurch wird einerseits die «Wirkungsbreite» der Aufsteilung und mithin die Breite der störenden Säume z.B. um Schriften in vorteilhafter Weise reduziert, so dass sie nicht mehr so stark ins Auge fallen. Anderseits ist auch der Signalübergang von «Schwarz» nach «Weiss» oder umgekehrt im Sinne einer Schärfesteigerung wesentlich steiler.

Durch Wahl entsprechender Gewichtsfaktoren «g» gemäss Gleichungen (5) und (7) lässt sich die Verkleinerung der «Wirkungsbreite» der Aufsteilung für unterschiedliche Vorlagen noch optimieren. Durch Differenzieren des Bildsignals lässt sich eine zusätzliche Versteilerung in Zeilenrichtung erreichen.

In bevorzugter Weise kann die Gradationskurve, nach der das Bildsignal $U_b$ in der Gradations-Stufe 32 verzerrt wird, in Abhängigkeit des zweiten Umfeldsignals $U_{u2}$ modifiziert bzw. umgeschaltet werden, wodurch in dunklen Bildpartien der Vorlage eine verbesserte Tiefenaufsteilung erreicht wird. In diesem Falle ist ein Steuereingang 53 der Gradations-Stufe 32 über die Leitung 24 mit der Abtasteinrichtung 9 verbunden.

Falls die Bildsignalverarbeitung digital erfolgt, liegt es selbstverständlich im Rahmen der Erfindung, die Signalformerstufe 29 mit digitalen Bausteinen aufzubauen und die angegebenen Operationen rein digital durchzuführen.

**Patentansprüche**

1. Verfahren zur Kontraststeigerung bei der Wiederaufzeichnung von Vorlagen, bei dem

a) eine Vorlage (6) zur Gewinnung eines Bildsignals ($U_b$) bildpunkt- und zeilenweise optoelektronisch abgetastet wird,

b) ein erstes Umfeldsignal ($U_{u1}$) durch Bestimmen der mittleren Helligkeit eines gegenüber dem Bildpunkt (25) vergrösserten ersten Abtastbereichs (26) um den jeweils abgetasteten Bildpunkt (25) auf der Vorlage (6) gewonnen wird,

c) ein erstes Differenzsignal ($U_{d1}$) aus dem Bildsignal ($U_b$) und dem ersten Umfeldsignal ($U_{u1}$) gebildet wird und

d) dem Bildsignal ($U_b$) ein Korrektursignal ($U_k$) zur Kontraststeigerung überlagert wird, gekennzeichnet durch folgende Merkmale:

e) Gewinnen eines zweiten Umfeldsignals ($U_{u2}$) durch Bestimmen der mittleren Helligkeit eines gegenüber dem ersten Abtastbereich (26) vergrösserten zweiten Abtastbereichs (27) um den jeweils abgetasteten Bildpunkt (25) auf der Vorlage (6),

f) Bilden eines zweiten Differenzsignals ($U_{d2}$) aus dem Bildsignal ($U_b$) und dem zweiten Umfeldsignal ($U_{u2}$) und eines dritten Differenzsignals ($U_{d3}$) aus den beiden Umfeldsignalen ($U_{u1}$; $U_{u2}$),

g) Verknüpfen des ersten Differenzsignals ($U_{d1}$) mit mindestens einem der anderen Differenzsignale ($U_{d2}$; $U_{d3}$) zur Bildung eines Hilfssignals ($U_h$) und

h) Erzeugen des Korrektursignals ($U_k$) durch Addition des ersten Differenzsignals ($U_{d1}$) und des gegebenenfalls invertierten Hilfssignals ($U_h$).

2. Verfahren nach Anspruch 1, dadurch gekennzeichnet, dass durch Invertierung bzw. Nichtinvertierung des Hilfssignals ($U_h$) die Unsymmetrie der Kontraststeigerung in der Vorlage bestimmt wird.

3. Verfahren nach Anspruch 1, dadurch gekennzeichnet, dass für eine symmetrische Kontraststeigerung alle drei Differenzsignale ($U_{d1}$; $U_{d2}$; $U_{d3}$) miteinander verknüpft werden.

4. Verfahren nach einem der Ansprüche 1 bis 3, dadurch gekennzeichnet, dass die Differenzsignale ($U_{d1}$; $U_{d2}$; $U_{d3}$) mit unterschiedlicher Gewichtung miteinander verknüpft werden.

5. Verfahren nach einem der Ansprüche 1 bis 4, dadurch gekennzeichnet, dass die Verknüpfung der Differenzsignale ($U_{d1}$; $U_{d2}$; $U_{d3}$) zum Hilfssignal ($U_h$) multiplikativ erfolgt.

6. Verfahren nach einem der Ansprüche 1 bis 5, dadurch gekennzeichnet, dass

a) das Bildsignal nach einer Gradation verzerrt wird, und

b) die Gradation in Abhängigkeit vom zweiten Umfeldsignal ($U_{u2}$) verändert wird.

7. Verfahren nach einem der Ansprüche 1 bis 6, dadurch gekennzeichnet, dass die Umfeldsignale ($U_{u1}$; $U_{u2}$) durch zusätzliche Abtastung der Vorlage mittels Umfeld-Blenden gewonnen werden, wobei die Blendenöffnungen jeweils die Abtastbereiche festlegen.

8. Verfahren nach einem der Ansprüche 1 bis 6, dadurch gekennzeichnet, dass die Umfeldsignale ($U_{u1}$; $U_{u2}$) aus den Bildsignalwerten der in den jeweiligen Abtastbereichen liegenden Bildpunkte berechnet werden.

9. Schaltungsanordnung zur Kontraststeigerung bei der Wiederaufzeichnung von Vorlagen, bestehend aus:

a) einem Abtastorgan (9) mit einem optoelektronischen Wandler (15) zur Gewinnung eines Bildsignals ($U_b$),

b) einer ersten Signalquelle (9; 20) zur Erzeugung eines ersten Umfeldsignals ($U_{u1}$), welches ein Mass für die mittlere Helligkeit eines gegenüber dem Bildpunkt (25) vergrösserten ersten Abtastbereichs (26) um den jeweils abgetasteten Bildpunkt (25) auf der Vorlage (6) ist,

c) einer Signalformerstufe (29) zur Erzeugung eines Korrektursignals ($U_k$) mit einer ersten Differenzstufe (37) zur Bildung eines ersten Differenzsignals ($U_{d1}$) aus dem Bildsignal ($U_b$) und dem ersten Umfeldsignal ($U_{u1}$), welche mit dem Abtastorgan (9) und der ersten Signalquelle (9; 20) verbunden ist, und

d) einer mit dem Abtastorgan (9) und dem Ausgang der Signalformerstufe (29) verbundenen Überlagerungsstufe (30) für Bildsignal ($U_b$) und Korrektursignal ($U_k$), dadurch gekennzeichnet, dass

e) eine an die Signalformerstufe (29) angeschlossene zweite Signalquelle (9; 23) zur Erzeugung eines zweiten Umfeldsignals ($U_{u2}$) vorgesehen ist, welches ein Mass für die mittlere Helligkeit eines gegenüber dem ersten Abtastbereich (26) vergrösserten zweiten Abtastbereichs (27) ist, und dass die Signalformerstufe (29) zusätzlich folgende Komponenten aufweist:

f) eine zweite Differenzstufe (38) zur Bildung eines zweiten Differenzsignals ($U_{d2}$) aus dem Bildsignal ($U_b$) und dem zweiten Umfeldsignal ($U_{u2}$), deren Eingänge mit dem Abtastorgan (9) und der zweiten Signalquelle (9; 23) verbunden sind,

g) eine dritte Differenzstufe (39) zur Bildung eines dritten Differenzsignals ($U_{d3}$) aus den beiden Umfeldsignalen ($U_{u1}$; $U_{u2}$), deren Eingänge an die beiden Signalquellen (9; 20 und 9; 23) angeschlossen sind,

h) eine an die Differenzstufen (37; 38; 39) angeschlossene Auswahl-Stufe (43) für die Differenzsignale ($U_{d1}$; $U_{d2}$; $U_{d3}$),

i) eine der Auswahl-Stufe (43) nachgeschaltete Verknüpfungsstufe (45) zur Bildung eines Hilfssignals ($U_h$) aus den ausgewählten Differenzsignalen ($U_{d1}$; $U_{d2}$; $U_{d3}$), und

j) eine an die Verknüpfungsstufe (45) und die erste Differenzstufe (37) angeschlossene Stufe (46; 47) zur Bildung des Korrektursignals ($U_k$) durch Addition bzw. Subtraktion von Hilfssignal ($U_h$) und erstem Differenzsignal ($U_{d1}$), wobei der Ausgang der Stufe (46; 47) den Ausgang der Signalformerstufe (29) bildet.

10. Schaltungsanordnung nach Anspruch 9, dadurch gekennzeichnet, dass die Verknüpfungs-Stufe (45) als Multiplizierer ausgebildet ist.

11. Schaltungsanordnung nach Anspruch 9 oder 10, dadurch gekennzeichnet, dass

a) die erste Signalquelle (9, 20) eine erste Umfeld-Blende (19), deren Blendenöffnung den ersten Abtastbereich festlegt, und einen optoelektronischen Wandler (20) zur Gewinnung des ersten Umfeldsignals aus dem Abtastlicht der Vorlage, und

b) die zweite Signalquelle (9, 23) eine zweite Umfeld-Blende (22), deren Blendenöffnung den zweiten Abtastbereich festlegt, und einen weiteren optoelektronischen Wandler (23) zur Gewinnung des zweiten Umfeldsignals ($U_{u2}$) aus dem Abtastlicht der Vorlage enthält.

## Claims

1. Process for contrast intensification during rerecording of orignals, in which

a) an original (6) is scanned opto-electronically image dot by image dot and line by line to obtain an image signal ($U_b$),

b) a first outer field signal ($U_{u1}$) is obtained by determining the mean brightness of a first scanning region (26) enlarged as compared to the image dot (25) around the image dot (25) scanned in each case on the original (6),

c) a first differential signal ($U_{d1}$) is formed from the image signal ($U_b$) and the first outer field signal ($U_{u1}$), and

d) a corrective signal ($U_k$) is superimposed on the image signal ($U_b$) for contrast intensification, characterized by the following features:

e) obtaining a second outer field signal ($U_{u2}$) by determining the mean brightness of a second scanning region (27) enlarged as compared to the first scanning region (26), around the image dot (25) scanned in each case on the original (6),

f) forming a second differential signal ($U_{d2}$) from the image signal ($U_b$) and the second outer field signal ($U_{u2}$), and a third differential signal ($U_{d3}$) from the two outer field signals ($U_{u1}$; $U_{u2}$),

g) combining the first differential signal ($U_{d1}$) with at least one of the other differential signals ($U_{d2}$; $U_{d3}$) to form an auxiliary signal ($U_h$), and

h) generating the corrective signal ($U_k$) by addition of the first differential signal ($U_{d1}$) and of the if necessary inverted auxiliary signal ($U_h$).

2. Process according to claim 1, characterized in that the asymmetry of the contrast intensification in the original is determined by inversion or non-inversion of the auxiliary signal ($U_h$).

3. Process according to claim 1, characterized in that all three differential signals ($U_{d1}$; $U_{d2}$; $U_{d3}$) are combined for a symmetrical contrast intensification.

4. Process according to one of the claims 1 to 3, characterized in that the differential signals ($U_{d1}$; $U_{d2}$; $U_{d3}$) are combined with different weighting.

5. Process according to one of the claims 1 to 4, characterized in that the combination of the differential signals ($U_{d1}$; $U_{d2}$; $U_{d3}$) with the auxiliary signal ($U_h$) is performed multiplicatively.

6. Process according to one of the claims 1 to 5, characterized in that

a) the image signal is distorted in accordance with a gradation,

b) the gradation is varied as a function of the second outer field signal ($U_{u2}$).

7. Process according to one of the claims 1 to 6, characterized in that the outer field signals ($U_{u1}$; $U_{u2}$) are obtained by complementary scanning of the original by means of outer field diaphragms, the diaphragm apertures in each case determining the scanning regions.

8. Process according to one of the claims 1 to 6, characterized in that the outer field signals ($U_{u1}$; $U_{u2}$) are computed from the image signal values of the image dots situated in the scanning regions in question.

9. Circuitry for contrast intensification during rerecording of originals, comprising;

a) a scanning unit (9) having an opto-electronic transducer (15) for obtaining an image signal ($U_b$),

. b) a first signal source (9; 20) for generating a first outer field signal ($U_{u1}$), which is a criterion for the mean brightness of a first scanning region (26) enlarged as compared to the image dot (25) around the image dot (25) scanned in each case on the original (6),

c) a signal forming stage (29) for generating a corrective signal ($U_k$) comprising a first differential stage (37) for forming a first differential signal ($U_{d1}$) from the image signal ($U_b$) and the first outer field signal ($U_{u1}$), which is connected to the scanning unit (9) and to the first signal source (9; 20), and

d) a superimposition stage (30) for the image signal ($U_b$) and the corrective signal ($U_k$), which is connected to the scanning unit (9) and the output of the signal forming stage (29), characterized in that

e) a second signal source (9; 23) connected to the signal forming stage (29) is provided to generate a second outer field signal ($U_{u2}$) which is a criterion for the mean brightness of a second scanning region (27) enlarged as compared to the first scanning region (26), and that the signal forming stage (29) complementary has the following components:

f) a second differential stage (38) for generating a second differential signal ($U_{d2}$) from the image signal ($U_b$) and the second outer field signal ($U_{u2}$), whose inputs are connected to the scanning unit (9) and the second signal source (9; 23),

g) a third differential stage (39) for generating a third differential signal ($U_{d3}$) from the two outer field signals ($U_{u1}$; $U_{u2}$), whose inputs are connected to both signal sources (9; 20 and 9; 23),

h) a selector stage (43) for the differential signals ($U_{d1}$; $U_{d2}$; $U_{d3}$), which is connected to the differential stages (37; 38; 39),

i) a combining stage (45) post-connected to the selector stage (43) for forming an auxiliary signal ($U_h$) from the selected differential signals ($U_{d1}$; $U_{d2}$; $U_{d3}$), and

j) a stage (46; 47) connected to the combining stage (45) and the first differential stage (37) for forming the corrective signal ($U_k$) by addition or subtraction of the auxiliary signal ($U_h$) and of the first differential signal ($U_{11}$), the output of the stage (46; 47) forming the output of the signal forming stage (29).

10. Circuitry according to claim 9, characterized in that the combining stage (45) is constructed as a multiplier.

11. Circuitry according to claim 9 or 10, characterized in that

a) the first signal source (9, 20) comprises an outer field diaphragm (19) whose diaphragm aperture determines the first scanning region, and an opto-electronic transducer (20) for obtaining the first outer field signal from the scanning light of the original, and

b) the second signal source (9, 23) comprises a second outer field diaphragm (22) whose diaphragm aperture determines the second scanning region, and another opto-electronic transducer (23) for obtaining the second outer field signal ($U_{u2}$) from the scanning light of the original.

**Revendications**

1. Procédé pour augmenter le contraste lors de la reproduction de modèles, procédé dans lequel:

a) on balaie optiquement et électroniquement par points et par lignes un modèle (6) pour obtenir un signal d'image ($U_b$),

b) on obtient un premier signal de champ ambiant ($U_{u1}$) en déterminant la luminance moyenne d'une première zone de balayage (26) augmentée par rapport au point d'image (25) autour du point d'image balayé à cet instant sur le modèle (6),

c) on forme à partir du signal d'image ($U_b$) et du premier signal de champ ambiant ($U_{u1}$) un premier signal différentiel ($U_{d1}$),

d) on superpose au signal d'image ($U_b$) un signal de correction ($U_k$) pour augmenter le contraste,

procédé caractérisé en ce que:

e) on obtient un second signal de champ ambiant ($U_{u2}$) en déterminant la luminance moyenne d'une seconde zone de balayage (27) agrandie par rapport à la première zone de balayage (26) autour du point d'image (25) balayé à ce moment sur le modèle (6),

f) on forme à partir du signal d'image ($U_b$) et du deuxième signal de champ ambiant ($U_{u2}$) un second signal différentiel ($U_{d2}$) ainsi qu'un troisième signal différentiel ($U_{d3}$) à partir des deux signaux de champ ambiant ($U_{u1}$; $U_{u2}$),

g) on combine le premier signal différentiel ($U_{d1}$) avec au moins un des autres signaux différentiels ($U_{d2}$; $U_{d3}$) pour former un signal auxiliaire ($U_h$),

h) on obtient le signal de correction ($U_k$) par addition du premier signal différentiel ($U_{d1}$) et du signal auxiliaire ($U_h$) éventuellement inversés.

2. Procédé selon la revendication 1, caractérisé en ce qu'on détermine l'asymétrie de l'augmentation de contrastes sur le modèle par inversion ou non inversion du signal auxiliaire ($U_h$).

3. Procédé selon la revendication 1, caractérisé en ce que pour une augmentation de contrastes symétrique on combine ensemble les trois signaux différentiels ($U_{d1}$; $U_{d2}$; $U_{d3}$).

4. Procédé selon une des revendications 1 à 3, caractérisé en ce qu'on combine entre eux les signaux différentiels ($U_{d1}$; $U_{d2}$; $U_{d3}$) avec une pondération différente.

5. Procédé selon une des revendications 1 à 4, caractérisé en ce qu'on réalise la combinaison des signaux différentiels ($U_{d1}$; $U_{d2}$; $U_{d3}$) pour former le signal auxiliaire ($U_h$), par multiplication.

6. Procédé selon une des revendications 1 à 5, caractérisé en ce que:

a) le signal d'image est déformé selon une gradation,

b) la gradation est modifiée en fonction du second signal de champ ambiant ($U_{u2}$).

7. Procédé selon une des revendications 1 à 6, caractérisé en ce que l'on obtient les signaux de champ ambiant ($U_{u1}$; $U_{u2}$) par balayage supplé-

mentaire du modèle au moyen de diaphragmes de champs ambiants, les ouvertures de ces diaphragmes déterminant respectivement les zones de balayage.

8. Procédé selon une des revendications 1 à 6, caractérisé en ce que les signaux de champ ambiant ($U_{u1}$; $U_{u2}$) sont calculés à partir de valeurs de signaux d'image des points d'image se situant dans les zones de balayage respectives.

9. Dispositif de branchement pour augmenter le contraste lors de la reproduction de documents, dispositif comportant:

a) un organe de balayage (9) avec un convertisseur opto-électronique (15) pour obtenir un signal d'image ($U_b$),

b) une première source de signaux (9; 20) pour obtenir un premier signal du champ ambiant ($U_{u1}$), qui constitue une mesure pour la luminance moyenne d'une première zone de balayage (26) agrandie par rapport au point d'image (25) autour du point d'image (25) balayé à ce moment sur le modèle (6),

c) un étage de mise en forme de signaux (29) pour obtenir un signal de correction ($U_k$) avec un premier étage différentiel (37) pour former un premier signal différentiel ($U_{d1}$) à partir du signal d'image ($U_b$) et du premier signal de champ ambiant ($U_{u1}$), cet étage différentiel étant relié à l'organe de balayage (9) et à la première source de signaux (9; 20),

d) un étage de superposition (30) relié à l'organe de balayage (9) et à la sortie de l'étage de mise en forme de signaux (29), pour superposer le signal d'image ($U_b$) et le signal de correction ($U_k$),

dispositif caractérisé en ce que:

e) il est prévu une deuxième source de signaux (9; 23), raccordée à l'étage de mise en forme des signaux (29), pour obtenir un second signal de champ ambiant ($U_{u2}$), qui constitue une mesure pour la luminance moyenne d'une seconde zone de balayage (27) agrandie par rapport à la première zone de balayage (26), tandis que l'étage de mise en forme des signaux (29) comporte en outre les composants suivants:

f) un second étage différentiel (38) pour former un second signal différentiel ($U_{d2}$) à partir du signal d'image ($U_b$) et du deuxième signal de champ ambiant ($U_{u2}$), les entrées de ce second étage différentiel étant reliées à l'organe de balayage (9) et à la seconde source de signaux (9; 23),

g) un troisième étage différentiel (39) pour former un troisième signal différentiel ($U_{d3}$) à partir des deux signaux de champ ambiant ($U_{u1}$; $U_{u2}$), les entrées de ce troisième étage différentiel étant raccordées aux deux sources de signaux (9; 20 et 9; 23),

h) un étage de sélection (43) raccordé aux étages différentiels (37; 38; 39) pour les signaux différentiels ($U_{d1}$; $U_{d2}$; $U_{d3}$),

i) un étage de combinaison (45) branché à la suite de l'étage de sélection (43) pour former un signal auxiliaire ($U_h$) à partir des signaux différentiels ainsi sélectionnés ($U_{d1}$; $U_{d2}$; $U_{d3}$),

j) un étage (46; 47) raccordé à l'étage de combinaison (45) et au premier étage différentiel (37) pour former le signal de correction ($U_k$) par addition ou bien par sous-traction du signal auxiliaire ($U_h$) et du premier signal différentiel ($U_{d1}$), la sortie de cet étage (46; 47) constituant la sortie de l'étage de mise en forme de signaux (29).

10. Dispositif de branchement selon la revendication 9, caractérisé en ce que l'étage de combinaison (45) est un multiplicateur.

11. Dispositif de branchement selon la revendication 9 ou 10, caractérisé en ce qu'il comporte:

a) la première source de signaux (9; 20), un premier diaphragme de champ ambiant (19), dont l'ouverture détermine la première zone de balayage, et un convertisseur opto-électronique (20) pour obtenir le premier signal de champ ambiant à partir de la lumière de balayage du modèle,

b) la deuxième source de signaux (9, 23), un second diaphragme de champ ambiant (22), dont l'ouverture détermine la seconde zone de balayage, et un autre convertisseur opto-électronique (23) pour obtenir le second signal de champ ambiant ($U_{u2}$) à partir de la lumière de balayage du modèle.

Fig. 1

Fig. 2

Fig. 3

Fig. 4